(11) **EP 3 245 700 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(21) Anmeldenummer: **15700989.5**

(22) Anmeldetag: **15.01.2015**

(51) Int Cl.:
*H02J 3/18* *(2006.01)* *H02J 3/32* *(2006.01)*
*H02M 1/12* *(2006.01)* *H02M 1/00* *(2006.01)*
*H02M 7/483* *(2007.01)*

(86) Internationale Anmeldenummer:
**PCT/EP2015/050694**

(87) Internationale Veröffentlichungsnummer:
**WO 2016/112986 (21.07.2016 Gazette 2016/29)**

(54) **ANORDNUNG MIT ZUMINDEST EINER REIHENSCHALTUNG UND VERFAHREN ZU DEREN BETRIEB**

ARRANGEMENT COMPRISING AT LEAST ONE SERIES CIRCUIT AND METHOD FOR OPERATING THE SAME

DISPOSITIF POURVU D'AU MOINS UN CIRCUIT SÉRIE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.11.2017 Patentblatt 2017/47**

(73) Patentinhaber: **Siemens Aktiengesellschaft**
**80333 München (DE)**

(72) Erfinder: **BARUSCHKA, Lennart**
**30900 Wedemark (DE)**

(56) Entgegenhaltungen:
**WO-A1-2010/040388 WO-A1-2010/102667**
**WO-A2-2012/156261**

**Beschreibung**

Die Erfindung bezieht sich auf eine Anordnung mit zumindest einer Reihenschaltung, die mindestens zwei in Reihe geschaltete Teilmodule umfasst, von denen zumindest eines ein Kondensatormodul ist, das mindestens einen Schalter und einen Kondensator umfasst, und von denen zumindest eines ein Speichermodul ist, das mindestens einen Schalter und einen elektrischen Speicher umfasst, wobei die Anordnung zur Ansteuerung der Schalter der Speicher- und Kondensatormodule eine Steuereinrichtung aufweist. Eine derartige Anordnung ist aus der Offenlegungsschrift zur internationalen Patentanmeldung WO2012/156261 A2 bekannt.

Aus der internationalen Patentanmeldung WO 2010/040388 A1 ist ein Multilevel-Stromrichter bekannt, der Module mit je einem Kondensator aufweist. Diese Module dienen zum Bereitstellen von Blindleistung. Außerdem weist der Stromrichter mindestens ein Modul mit einer Batterie auf; dieses Modul dient zum Bereitstellen von Wirkleistung.

Der Erfindung liegt die Aufgabe zugrunde, eine Anordnung dieser Art hinsichtlich der auftretenden Energieschwankung in den Teilmodulen zu verbessern.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass der Speicher des oder zumindest eines der Speichermodule eine größere Energiespeicherfähigkeit, insbesondere eine mindestens 100-mal größere Energiespeicherfähigkeit, als der Kondensator des oder zumindest eines der Kondensatormodule aufweist und die Steuereinrichtung derart ausgestaltet ist, dass sie die Speicher-module der Reihenschaltungen oder zumindest einer der Reihenschaltungen derart ansteuert, dass die Summenspannung, die sich durch Summenbildung der an den Speichermodulen der Reihenschaltung abfallenden Teilspannungen ergibt, einem von der Steuereinrichtung ermittelten Sollverlauf folgt.

Ein wesentlicher Vorteil der erfindungsgemäßen Anordnung ist darin zu sehen, dass bei dieser die Energieschwankung in den Speichermodulen im Vergleich zu herkömmlichen Anordnungen dieser Art reduziert ist. So ist es beispielsweise möglich, die Speichermodule lediglich zur Speicherung von Wirkleistung heranzuziehen und die Zwischenspeicherung von Blindleistung über die Kondensatormodule abzuwickeln. Die Lebensdauer der Speichermodule und damit die der Anordnung insgesamt lässt sich in dieser Weise signifikant verlängern.

Ein weiterer wesentlicher Vorteil der erfindungsgemäßen Anordnung besteht darin, dass diese - im Vergleich zu herkömmlichen Anordnungen dieser Art - mit einer reduzierten Anzahl an Speichermodulen auskommen kann, weil die Speicher-module für die Speicherung von Wirkleistung reserviert bleiben können.

Die Anordnung bildet vorzugsweise einen modularen Multilevel-Wechselrichter oder einen Multilevel-Pulswechselrichter.

Bei den elektrischen Speichern der Speichermodule handelt es sich vorzugsweise um Doppelschichtkondensatoren oder um Batterien bzw. um Speichereinrichtungen auf der Basis galvanischer Zellen.

Als vorteilhaft wird es angesehen, wenn die Anordnung eine Anordnung zur Kompensation von Blindleistung und Wirkleistung eines elektrischen Netzes bildet und die Steuereinrichtung derart ausgestaltet ist, dass sie die Teilmodule zum Zwecke der Blind- und Wirkleistungskompensation im elektrischen Netz ansteuert.

Vorzugsweise wird der vorgegebene Sollverlauf derart ermittelt, dass die Einspeisung und Aufnahme von Oberschwingungsblindleistung durch die Speichermodule der Reihenschaltung minimal ist.

Die Steuereinrichtung führt zur Ermittlung des Sollverlaufs ein iteratives Verfahren durch, bei dem in jedem Iterationsschritt jeweils ein erster vorläufiger Spannungs-verlauf unter Bildung eines Korrekturfaktors ermittelt wird.

In jedem Iterationsschritt wird jeweils der erste vorläufige Spannungsverlauf unter Bildung eines zweiten vorläufigen Spannungsverlaufs auf einen vorgegebenen Maximalwert gekappt.

Vorteilhaft ist es außerdem, wenn in jedem Iterationsschritt jeweils der zweite vorläufige Spannungsverlauf unter Bildung eines dritten vorläufigen Spannungsverlaufs um einen Differenzwert angehoben wird.

Im Rahmen des iterativen Verfahrens wird durch Integration eines aus dem zweiten oder dritten vorläufigen Spannungsverlauf und dem Strom durch die Reihenschaltung gebildeten Produkts über der Zeit ein mittlerer Leistungswert bestimmt, und zwar vorzugsweise durch Integration über ein ganzzahliges Vielfaches einer halben Periodenlänge.

Der mittlere Leistungswert wird als Abbruch-kriterium für das iterative Verfahren herangezogen.

Das iterative Verfahren wird abgebrochen und der jeweils aktuelle zweite oder dritte vorläufige Spannungsverlauf wird als ermittelter Spannungsverlauf für die Ansteuerung der Speichermodule herangezogen, wenn die Differenz zwischen dem jeweils aktuellen mittleren Leistungswert und dem mittleren Leistungswert des vorherigen Iterationsschritts kleiner als eine vorgegebene Abbruch-schwelle ist.

Es ist vorgesehen, dass mit dem mittleren Leistungswert der Korrektur-faktor angepasst wird, der zum Bilden eines ersten vorläufigen Spannungsverlaufs herangezogen wurde, und der jeweils nächste erste vorläufige Spannungsverlauf im nächsten Iterationsschritt unter Berücksichtigung des angepassten Korrekturfaktors ermittelt wird.

Der oben erwähnte Differenzwert wird vorzugsweise ermittelt unter Berücksichtigung einer vorgegebenen Schwellenspannung und der Kondensatormodulsummenspannung, die sich durch Summenbildung der an den Kondensatormodulen der Reihenschaltung abfallenden Teilspannungen ergibt, und zwar vorzugs-weise, indem

(a) die Kondensatormodulsummenspannung ermittelt wird gemäß:

$$Uc(t) = Uz(t) - Us(t)$$

wobei Uc(t) die Kondensatormodulsummenspannung bezeichnet, Uz(t) die an der Reihenschaltung abfallende Spannung bezeichnet und Us(t) die Summenspannung bezeichnet, die sich durch Summenbildung der an den Speichermodulen der Reihenschaltung abfallenden Teilspannungen ergibt, und
(b) folgende Zuordnungsoperation durchgeführt wird:

$$Udiff(t) = \begin{cases} Uc(t) - Uc\max & f\ddot{u}r \quad Uc(t) > Uc\max \\ 0 & f\ddot{u}r \quad |Uc(t)| \le Uc\max \\ Uc(t) + Uc\max & f\ddot{u}r \quad Uc(t) < Uc\max \end{cases}$$

wobei Udiff(t) den Differenzwert und Ucmax die Schwellenspannung bezeichnet.

Bevorzugt ermittelt die Steuereinrichtung den Sollverlauf, indem sie in jedem Iterationsschritt eines Iterationsverfahrens

(a) einen ersten vorläufigen Spannungsverlauf ermittelt gemäß:

$$U1(t) = \frac{P}{Iz(t)} \cdot K$$

wobei U1(t) den ersten vorläufigen Spannungsverlauf bezeichnet, P die Wirkleistung bezeichnet, die die Reihenschaltung aufnehmen oder abgeben soll, Iz(t) den durch die Reihenschaltung fließenden Strom bezeichnet und K einen Korrekturfaktor bezeichnet,
(b) einen zweiten vorläufigen Spannungsverlauf ermittelt gemäß:

$$U2(t) = \begin{cases} Us\max & f\ddot{u}r \quad U1(t) > Us\max \\ U1(t) & f\ddot{u}r \quad |U1(t)| \le Us\max \\ -Us\max & f\ddot{u}r \quad U1(t) < -Us\max \end{cases}$$

wobei U2(t) den zweiten vorläufigen Spannungsverlauf bezeichnet und Usmax einen zur Kappung vorgesehenen Maximalwert bezeichnet,
(c) eine vorläufige Kondensatormodulsummenspannung ermittelt gemäß:

$$Uc(t) = Uz(t) - U2(t)$$

wobei Uc(t) die vorläufige Kondensatormodulsummenspannung bezeichnet und Uz(t) die an der Reihenschaltung abfallende Spannung bezeichnet,
(d) folgende Zuordnungsoperation durchführt:

$$Udiff(t) = \begin{cases} Uc(t) - Uc\max & f\ddot{u}r \quad Uc(t) > Uc\max \\ 0 & f\ddot{u}r \quad |Uc(t)| \le Uc\max \\ Uc(t) + Uc\max & f\ddot{u}r \quad Uc(t) < Uc\max \end{cases}$$

wobei Udiff(t) einen Differenzwert und Ucmax eine vorgegebene Schwellenspannung bezeichnet,
(e) einen dritten vorläufigen Spannungsverlauf ermittelt gemäß:

$$U3(t) = Us(t) + Udiff$$

wobei U3(t) den dritten vorläufigen Spannungsverlauf bezeichnet,
(f) eine Integration durchführt gemäß:

$$Mp = \frac{1}{T} \int_0^T U3(t) \cdot Iz(t) \, dt$$

wobei T die Periodenlänge der an der Reihenschaltung abfallenden Spannung bezeichnet und Mp einen mittleren Leistungswert bezeichnet,
(g) die Iteration abbricht, wenn die Differenz zwischen dem jeweiligen mittleren Leistungswert und dem mittleren Leistungswert des vorherigen Iterationsschritts kleiner als eine vorgegebene Abbruchschwelle ist,
(h) den Korrekturfaktor unter Bildung eines angepassten Korrekturfaktors anpasst, insbesondere gemäß:

$$Kneu = K \cdot \frac{P}{Mp}$$

wobei Kneu den angepassten Korrekturfaktor bezeichnet und
(i) der nächste Iterationszyklus mit Iterationsschritt (a) unter Verwendung des angepassten Korrekturfaktors begonnen wird oder bei Abbruch der Iteration U3(t) als Sollverlauf weiterverwendet wird.

Als vorteilhaft wird es ebenfalls angesehen, wenn - alternativ oder zusätzlich - die Steuereinrichtung den Sollverlauf ermittelt, indem sie in jedem Iterationsschritt eines Iterationsverfahrens

(a) einen ersten vorläufigen Spannungsverlauf ermittelt gemäß:

$$U1(t) = \frac{P}{Iz(t)} \cdot K$$

wobei U1(t) den ersten vorläufigen Spannungsverlauf bezeichnet, P die Wirkleistung bezeichnet, die die Reihenschaltung aufnehmen oder abgeben soll, Iz(t) den durch die Reihenschaltung fließenden Strom bezeichnet und K einen Korrekturfaktor bezeichnet,
(b) einen zweiten vorläufigen Spannungsverlauf ermittelt gemäß:

$$U2(t) = \begin{cases} Us\max & f\ddot{u}r & U1(t) > Us\max \\ U1(t) & f\ddot{u}r & |U1(t)| \leq Us\max \\ -Us\max & f\ddot{u}r & U1(t) < -Us\max \end{cases}$$

wobei U2(t) den zweiten vorläufigen Spannungsverlauf bezeichnet und Usmax einen zur Kappung vorgesehenen Maximalwert bezeichnet,
(c) eine Integration durchführt gemäß:

$$Mp = \frac{1}{T} \int_0^T U2(t) \cdot Iz(t) \, dt$$

wobei T die Periodenlänge der an der Reihenschaltung abfallenden Spannung bezeichnet und Mp einen mittleren Leistungswert bezeichnet,
(d) die Iteration abbricht, wenn die Differenz zwischen dem jeweiligen mittleren Leistungswert und dem mittleren Leistungswert des vorherigen Iterationsschritts kleiner als eine vorgegebene Abbruchschwelle ist,
(e) den Korrekturfaktor unter Bildung eines angepassten Korrekturfaktors anpasst, insbesondere gemäß:

$$Kneu = K \cdot \frac{P}{Mp}$$

wobei Kneu den angepassten Korrekturfaktor bezeichnet und

(f) der nächste Iterationszyklus mit Iterationsschritt (a) unter Verwendung des angepassten Korrekturfaktors begonnen wird.

Bei einer alternativen, aber ebenfalls als vorteilhaft angesehenen Ausgestaltung ist vorgesehen, dass die Steuereinrichtung derart ausgestaltet ist, dass sie die Speichermodule der Reihenschaltungen oder zumindest einer der Reihenschaltungen derart ansteuert, dass die Summenspannung, die sich durch Summenbildung der an den Speichermodulen der Reihenschaltung abfallenden Teilspannungen ergibt, und der Strom durch die jeweilige Reihenschaltung folgende zeitliche Verläufe aufweisen:

$$Us(t) = \frac{P}{S} \cdot \hat{U} \cdot \cos(\omega t)$$

und

$$Iz(t) = \hat{I} \cdot \cos(\omega t)$$

wobei Us(t) den ermittelten Sollverlauf für die Summenspannung bezeichnet, P die von den Speichermodulen der Reihenschaltung gemeinsam abzugebende oder aufzunehmende Wirkleistung bezeichnet, S die von der Reihenschaltung abzugebende oder aufzunehmende Scheinleistung bezeichnet, $\hat{U}$ den Scheitelwert der an der Reihenschaltung anliegenden Spannung bezeichnet und $\hat{I}$ den Scheitelwert des durch die Reihenschaltung fließenden Stromes bezeichnet.

Die Erfindung bezieht sich darüber hinaus auf ein Verfahren zum Betreiben einer Anordnung mit zumindest einer Reihenschaltung, die mindestens zwei in Reihe geschaltete Teilmodule umfasst, von denen zumindest eines ein Kondensatormodul ist, das mindestens einen Schalter und einen Kondensator umfasst, und von denen zumindest eines ein Speichermodul ist, das mindestens einen Schalter und einen Speicher umfasst, wobei der Speicher des Speichermoduls eine größere Energiespeicherfähigkeit als der Kondensator des Kondensator-moduls aufweist. Ein solches Verfahren ist aus der eingangs erwähnten Offenlegungsschrift zur internationalen Patentanmeldung WO2012/156261 A2 bekannt.

Erfindungsgemäß ist bezüglich eines solchen Verfahrens vorgesehen, dass die Speichermodule derart angesteuert werden, dass die Summenspannung, die sich durch Summenbildung der an den Speichermodulen der Reihenschaltung abfallenden Teilspannungen ergibt, gemäß einem von der Steuereinrichtung ermittelten Sollverlauf folgt.

Bezüglich der Vorteile des erfindungsgemäßen Verfahrens sei auf die obigen Ausführungen im Zusammenhang mit der erfindungsgemäßen Anordnung verwiesen, da letztgenannte für das Verfahren entsprechend gelten.

Die Erfindung wird nachfolgend anhand von Ausführungsbeispielen näher erläutert, dabei zeigen beispielhaft

Figur 1      ein Ausführungsbeispiel für eine erfindungsgemäße Anordnung, bei der Reihenschaltungen mit jeweils mindestens zwei in Reihe geschalteten Teilmodulen zu einer Sternpunktschaltung verschaltet sind,

Figur 2      ein Ausführungsbeispiel für ein Kondensatormodul für die Anordnung gemäß Figur 1,

Figur 3      ein Ausführungsbeispiel für ein Speichermodul für die Anordnung gemäß Figur 1,

Figur 4      ein Ausführungsbeispiel für eine erfindungsgemäße Anordnung, bei der Reihenschaltungen mit jeweils mindestens zwei in Reihe geschalteten Teilmodulen zu einer Dreiecksschaltung verschaltet sind,

Figur 5      beispielhaft eine Kombination aus Speichermodulen und Kondensatormodulen innerhalb einer Reihenschaltung,

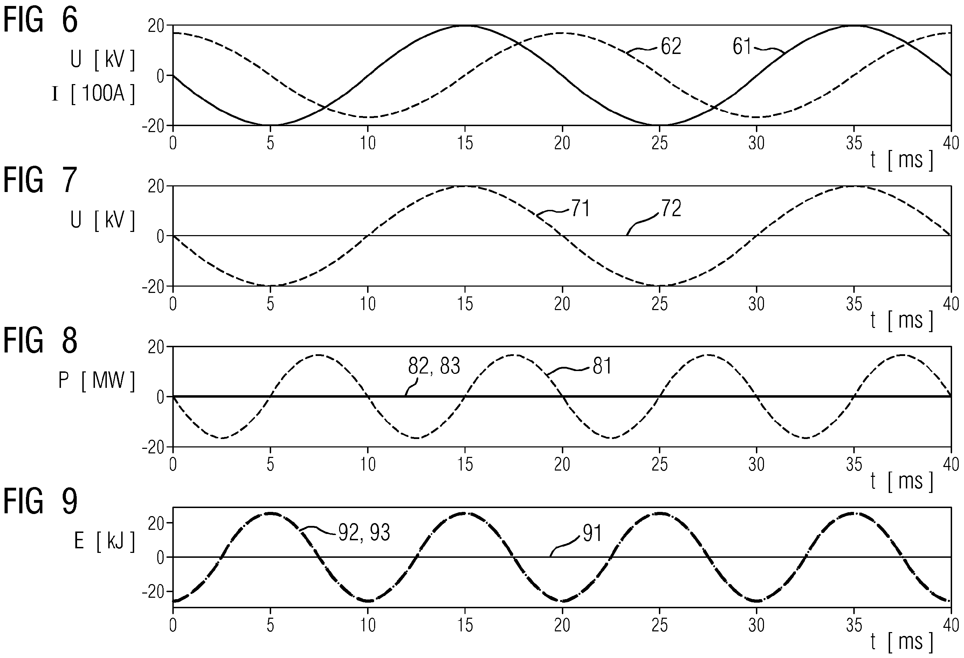

Fig. 6-9      ein Ausführungsbeispiel für Verläufe von Zweigspannung und -strom (Fig. 6), Teil-Zweigspannungen (Fig. 7), Teil-Zweigleistungen (Fig. 8) und mittlerer Speicherleistung sowie von der Energievariation in den Teilzweigen und zum Vergleich die Energievariation im Gesamtzweig, abzüglich des jeweiligen Mittelwerts (Fig. 9) für folgende Parameter: Swr = 16,7 MVA, $\hat{U}z = \sqrt{2}$ *13,9 kV, φ = 90° (reine Blindleistung), wobei die Kurve 61 die Zweigspannung, die Kurve 62 den Zweigstrom, die Kurve 71 die Ausgangsspannung der Kondensatormodule, die Kurve 72 die Ausgangsspannung der Speichermodule, die Kurve 81 die Kondensatorleistung der Kondensatormodule, die Kurve 82 die mittlere Speicherleistung, die Kurve 83 die Speicherleistung der Speichermodule, die Kurve 91 die Energieschwankung der Speichermodule, die Kurve 92 die Energieschwankung der Kondensatormodule und die Kurve 93 die Energieschwankung im Zweig bezeichnet,

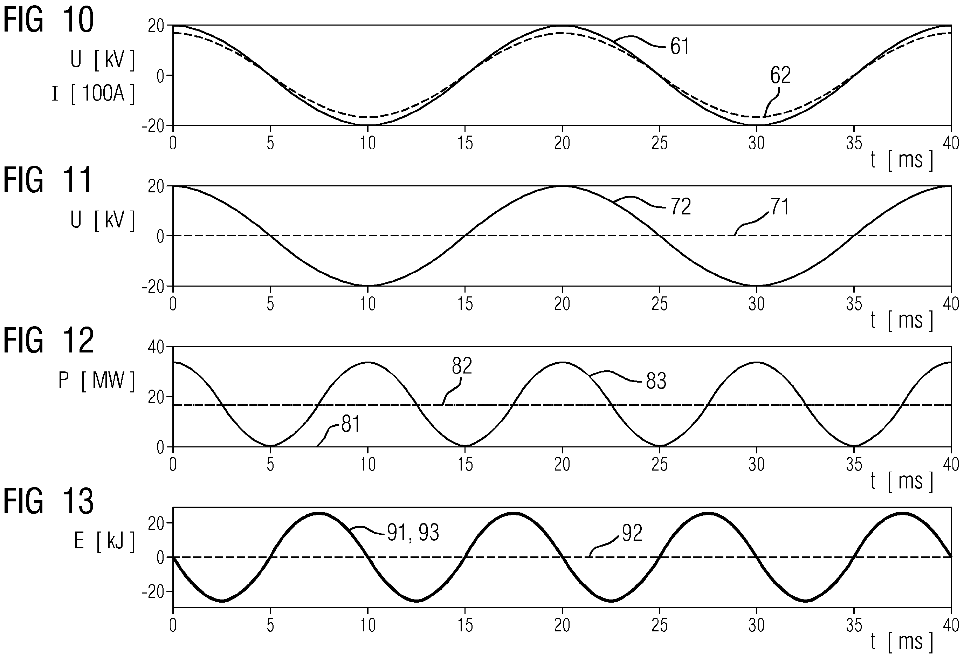

Fig. 10-13 ein Ausführungsbeispiel für Verläufe von Zweigspannung und -strom (Fig. 10), Teil-Zweigspannungen (Fig. 11), Teil-Zweigleistungen (Fig. 12) und mittlerer Speicherleistung sowie von der Energievariation in den Teilzweigen und zum Vergleich die Energievariation im Gesamtzweig, abzüglich des jeweiligen Mittelwerts (Fig. 13) für folgende Parameter: Swr = 16,7 MVA, $\hat{U}z = \sqrt{2}$ *13,9 kV, φ = 0° (reine Wirkleistung), wobei die Kurve 61 die Zweigspannung, die Kurve 62 den Zweigstrom, die Kurve 71 die Ausgangsspannung der Kondensatormodule, die Kurve 72 die Ausgangsspannung der Speichermodule, die Kurve 81 die Kondensatorleistung der Kondensatormodule, die Kurve 82 die mittlere Speicherleistung, die Kurve 83 die Speicherleistung der Speichermodule, die Kurve 91 die Energieschwankung der Speichermodule, die Kurve 92 die Energieschwankung der Kondensatormodule und die Kurve 93 die Energieschwankung im Zweig bezeichnet und

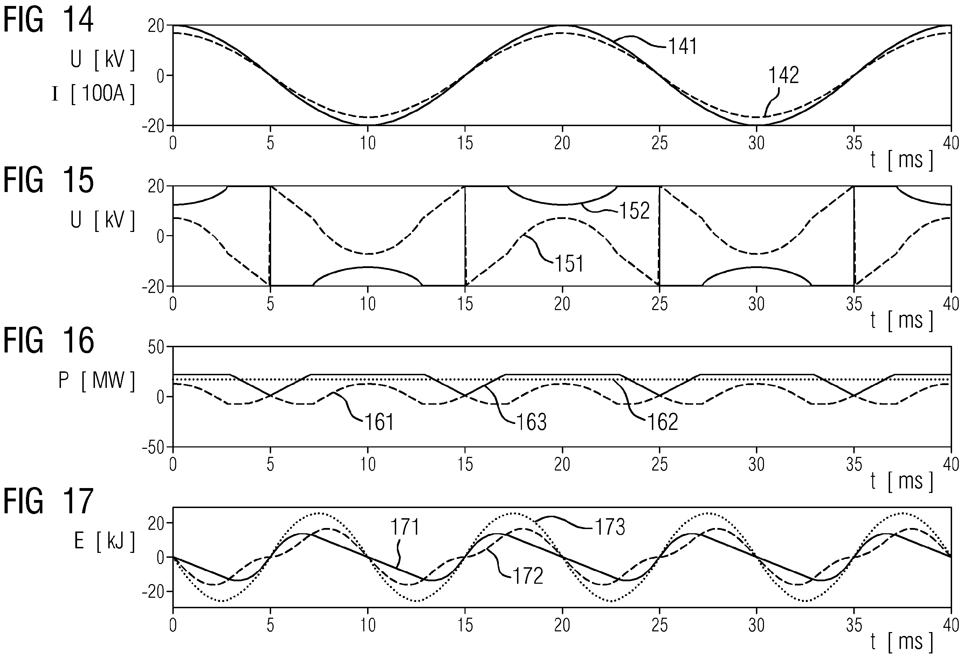

Fig. 14-17 ein weiteres Ausführungsbeispiel für Verläufe von Zweigspannung und -strom (Fig. 14), TeilZweigspannungen (Fig. 15), Teil-Zweigleistungen (Fig. 16) und mittlerer Speicherleistung sowie von der Energievariation in den Teilzweigen und zum Vergleich die Energievariation im Gesamtzweig, abzüglich des jeweiligen Mittelwerts (Fig. 17) für folgende Parameter: Swr = 16,7 MVA, $\hat{U}z = \sqrt{2} *13,9\ kV$, φ = 0° (reine Wirkleistung), wobei die Kurve 141 die Zweigspannung, die Kurve 142 den Zweigstrom, die Kurve 151 die Ausgangsspannung der Kondensator-module, die Kurve 152 die Ausgangsspannung der Speichermodule, die Kurve 161 die Kondensator-leistung der Kondensatormodule, die Kurve 162 die mittlere Speicherleistung, die Kurve 163 die Speicherleistung der Speichermodule, die Kurve 171 die Energieschwankung der Speichermodule, die Kurve 172 die Energieschwankung der Kondensatormodule und die Kurve 173 die Energie-schwankung im Zweig bezeichnet.

In den Figuren werden der Übersicht halber für identische oder vergleichbare Komponenten stets dieselben Bezugszeichen verwendet.

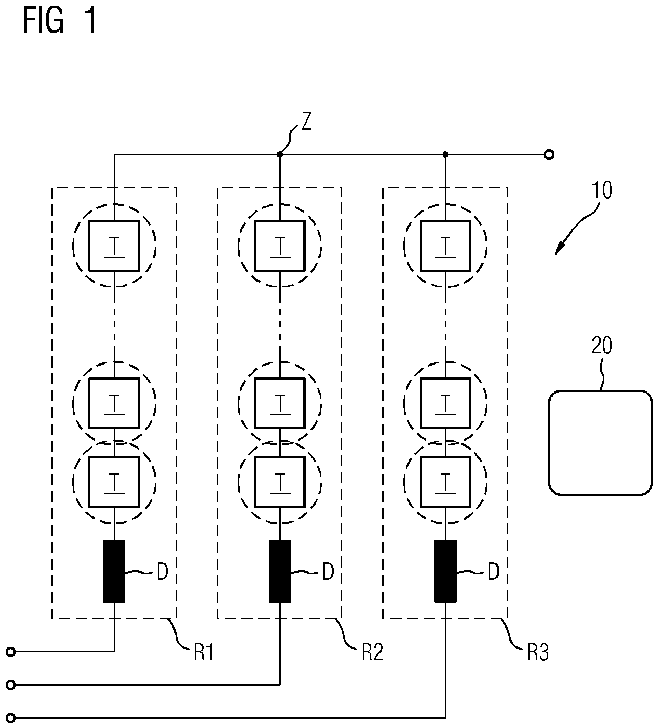

Die Figur 1 zeigt eine Anordnung 10 mit drei Reihenschaltungen R1, R2 und R3, die unter Bildung eines gemeinsamen Sternpunkts Z miteinander verschaltet sind. Die drei Reihenschaltungen R1, R2 und R3 umfassen jeweils mindestens zwei in Reihe geschaltete Teilmodule T, von denen zumindest eines ein Kondensatormodul und von denen zumindest eines ein Speichermodul ist. Zur Ansteuerung von elektrischen Schaltern der Speicher- und Kondensatormodule weist die Anordnung 10 eine Steuereinrichtung 20 auf. Die Verbindungsleitungen zwischen der Steuereinrichtung 20 und den Teilmodulen T sind aus Gründen der Übersicht in der Figur 1 nicht dargestellt.

Die Steuereinrichtung 20 ist derart ausgestaltet, dass sie die Speichermodule der Reihenschaltungen R1 bis R3 oder zumindest einer der Reihenschaltungen derart ansteuert, dass die Summenspannung, die sich durch Summenbildung der an den Speichermodulen der Reihenschaltung abfallenden Teilspannungen ergibt, einem von der Steuereinrichtung 20 ermittelten Sollverlauf folgt.

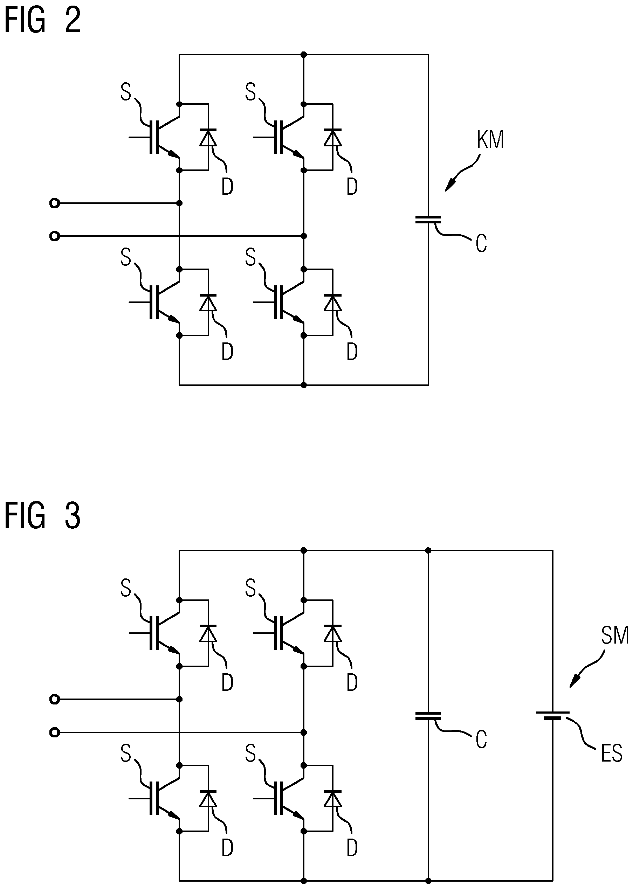

Die Figur 2 zeigt ein Ausführungsbeispiel für ein Kondensatormodul, das in der Figur 2 mit dem Bezugszeichen KM gekennzeichnet ist. Das Kondensatormodul KM umfasst Schalter S, Dioden D und einen Kondensator C.

Die Figur 3 zeigt ein Ausführungsbeispiel für ein Speichermodul, das in der Figur 3 mit dem Bezugszeichen SM gekennzeichnet ist. Das Speichermodul SM umfasst Schalter S, Dioden D, einen elektrischen Speicher ES und optional einen Kondensator C. Die Energiespeicherfähigkeit des Speichers ES des Speichermoduls SM ist größer, vorzugsweise mindestens 100-mal größer, als die Energiespeicherfähigkeit des Kondensators C des Kondensatormoduls KM sowie vorzugsweise größer, vorzugsweise mindestens 100-mal größer, als die Energiespeicherfähigkeit des fakultativ vorhandenen Kondensators C des Speichermoduls SM. Bei dem Speicher ES handelt es sich vorzugsweise um eine Batterie.

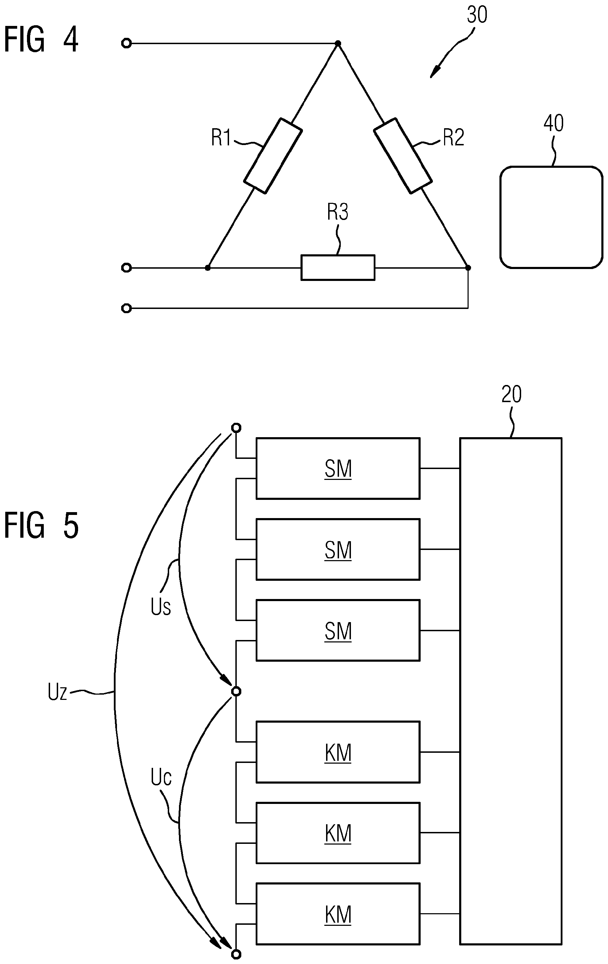

Die Figur 4 zeigt eine Anordnung 30 mit drei Reihenschaltungen R1, R2 und R3, die eine Dreiecksschaltung bilden. Die drei Reihenschaltungen R1, R2 und R3 umfassen jeweils mindestens zwei in Reihe geschaltete Teilmodule, von denen zumindest eines ein Kondensatormodul KM und von denen zumindest eines ein Speichermodul SM ist (vgl. Figuren 2 und 3). Zur Ansteuerung von elektrischen Schaltern der Speicher- und Kondensatormodule SM und KM weist die Anordnung 30 eine Steuereinrichtung 40 auf. Die Verbindungsleitungen zwischen der Steuereinrichtung 20 und den Teilmodulen T sind aus Gründen der Übersicht in der Figur 4 nicht dargestellt.

Die Steuereinrichtung 40 ist derart ausgestaltet, dass sie die Speichermodule der Reihenschaltungen R1 bis R3 oder zumindest einer der Reihenschaltungen derart ansteuert, dass die Summenspannung, die sich durch Summenbildung der an den Speichermodulen der Reihenschaltung abfallenden Teilspannungen ergibt, einem von der Steuereinrichtung 40 ermittelten Sollverlauf folgt.

Die Verteilung der Spannungen auf die Speichermodule SM und die Kondensatormodule KM ist beispielhaft in der Figur 5 gezeigt.

Die Anordnungen 10 und 30, insbesondere deren Steuereinrichtungen 20 und 40, gemäß den Figuren 1 und 4 können beispielsweise wie folgt betrieben werden:

Ohne die Kondensatormodule KM würde an den Speichermodulen SM die gesamte Zweigspannung Uz(t) anstehen (vgl. Figur 5). Für diese gelte im Folgenden:

$$Uz(t) = \hat{U}z \cdot \cos(\omega t + \varphi) \qquad (1)$$

Für den Zweigstrom gelte:

$$Iz(t) = \hat{I}z \cdot \cos(\omega t) \qquad (2)$$

In Folge dessen müssen die Speichermodule SM die gewünschte Wirkleistung sowie die gewünschte Blindleistung bereitstellen.

Durch den Einsatz zusätzlicher Kondensatormodule KM ergibt sich die Möglichkeit, nur noch die Wirkleistung durch die Speichermodule bereitstellen zu müssen. Bei gleichbleibender Zweigspannungsamplitude gilt für die Amplitude des Zweigstroms in Abhängigkeit von der Wechselrichterscheinleistung Swr im dreiphasigen Fall:

$$\hat{I}z = \frac{2}{3} \frac{Pwr}{Swr} \qquad (3)$$

Die Zweigspannung lässt sich gemäß einem ersten nachfolgend beschriebenen Ausführungsbeispiel aufteilen auf die Speichermodule SM und die Kondensatormodule KM gemäß:

$$Us(t) = \frac{Pwr}{Swr} \cdot \hat{U}z \cdot \cos(\omega t) \qquad (4)$$

$$Uc(t) = \frac{Qwr}{Swr} \cdot \hat{U}z \cdot \cos(\omega t - \frac{\pi}{2}) \qquad (5)$$

Die Figuren 6-9 zeigen das Ergebnis für reinen Blindleistungsbetrieb. Erwartungsgemäß lässt sich erkennen, dass die Aufteilung eine Energieschwankung in den Speichern ES der Speichermodule SM verhindert.

Die gezeigte Aufteilung von Wirk- und Blindleistung auf die beiden Modultypen ermöglicht zwar bezüglich der Grundschwingung eine ausschließliche Wirkleistungsbereitstellung der Speichermodule SM, bezüglich der Oberschwingungsblindleistung existiert jedoch noch Optimierungspotential. Dies wird von einem zweiten im Folgenden vorgestellten Verfahren genutzt:

Eine Verringerung der mit doppelter Netzfrequenz auftretenden Energieschwankung im Energiespeicher lässt sich durch eine möglichst "glatte" Leistungsentnahme erreichen. Ideal wäre - im dreiphasigen Falle - eine Spannungsform der Energiespeichermodule von

$$Us(t) = \frac{Pwr}{3} \cdot \frac{1}{Iz(t)} \cdot K \qquad (6)$$

wobei K einen Korrekturfaktor bezeichnet.

Da Iz(t) sinusförmig ist, hat der sich ergebende Spannungsverlauf für Us(t) Polstellen bei den Nulldurchgängen von Iz(t).

Da sich auch in der Praxis eine derartige Spannung nicht realisieren lässt, erfolgt im nächsten Schritt eine Begrenzung der maximal auftretenden Amplitude auf ±Us,max. Da durch die Begrenzung die mittlere Speicherleistung unter den gewünschten Wert fällt, ist eine Erhöhung der in Gleichung (6) genutzten Wirkleistung Pwr um den Korrekturfaktor K erforderlich. Dessen Berechnung erfolgt zunächst iterativ durch wiederholtes:

1. Berechnen eines vorläufigen Spannungsverlaufs Us(t) nach Gleichung (6) mit K=1 als Startwert,

2. Begrenzen der Spannung auf ±Us,max,

3. Bestimmen der mittleren Leistung gemäß:

$$Mp = \frac{1}{T}\int_0^T Us(t)\cdot Iz(t)\,dt$$

wobei T die Periodenlänge der an der Reihenschaltung abfallenden Spannung bezeichnet und Mp einen mittleren Leistungswert bezeichnet, und

4. Anpassen des Korrekturfaktors gemäß

$$Kneu = K\cdot\frac{Pwr}{3\cdot Mp}$$

wobei Kneu den angepassten Korrekturfaktor bezeichnet und

5. Durchführen des nächsten Iterationszyklus mit Iterationsschritt 1, jedoch unter Verwendung des angepassten Korrekturfaktors Kneu.

Die Kondensatorzweigspannung Uc ergibt sich schließlich zu Uc = Uz-Us.

Für $Us,\mathbf{max}=\hat{U}z$ (und $Uc,\mathbf{max}=\hat{U}z$) ergeben sich bei reiner Wirkleistungsaufnahme die Verläufe, wie sie in den Figuren 14 bis 17 gezeigt sind. Die Verringerung der Energieschwankungsbreite in den Speichermodulen beträgt in diesem Fall 32%.

Ist entweder $Uc,\mathbf{max}<\hat{U}z$ oder besteht eine Blindleistungsanforderung, ist es vorteilhaft, die Begrenzung der Kondensatorzweigspannung zu berücksichtigen. Zu diesem Zweck kann eine Erweiterung des oben angegebenen iterativen Verfahrens auf folgendes Vorgehen erfolgen:

1. Berechnen eines vorläufigen Spannungsverlaufs Us'(t) nach Gleichung (6) mit K=1 als Startwert,
2. Begrenzen der Spannung auf ±Us,max,
3. Berechnen der vorläufigen Kondensatorzweigspannung gemäß

$$Uc(t) \ = \ Uz(t) \ - \ Us(t)$$

4. Bestimmen der Überschreitung Udiff(t) von Uc,max gemäß

$$Udiff(t) = \begin{cases} Uc(t)-Uc\max & \textit{für} \quad Uc(t) > Uc\max \\ 0 & \textit{für} \quad |Uc(t)| \le Uc\max \\ Uc(t)+Uc\max & \textit{für} \quad Uc(t) < Uc\max \end{cases}$$

5. Anpassen der Verläufe Us(t) und Uc(t) gemäß

$$Us(t) = Us'(t) + Udiff(t)$$

$$Uc(t) = Uc'(t) - Udiff(t)$$

6. Bestimmen der mittleren Leistung gemäß:

$$Mp = \frac{1}{T}\int\limits_{0}^{T} Us(t) \cdot Iz(t)\, dt$$

wobei T die Periodenlänge der an der Reihenschaltung abfallenden Spannung bezeichnet und Mp einen mittleren Leistungswert bezeichnet, und

7. Anpassen des Korrekturfaktors gemäß

$$Kneu = K \cdot \frac{Pwr}{3 \cdot Mp}$$

wobei Kneu den angepassten Korrekturfaktor bezeichnet, und

8. Durchführen des nächsten Iterationszyklus mit Iterationsschritt 1, jedoch unter Verwendung des angepassten Korrekturfaktors Kneu.

Auf diese Weise lassen sich beide Spannungsbeschränkungen berücksichtigen. Bei $\varphi = 45°$ beträgt die Verringerung der Energieschwankungsbreite durch den Einsatz von Kondensatormodulen ca. 49%.

Ein wesentlicher weiterer Vorteil des zweiten Verfahrens besteht darin, dass es ermöglicht, die maximale Speicherzweigspannung auf einen Wert unterhalb der maximalen Zweigspannung abzusenken. Im Extremfall ist es möglich, den Wert auf $\pi/4$ zu reduzieren. Dies resultiert in einer Blocktaktung der verwendeten Speichermodule SM, die Sinusform wird dann durch die Kondensatormodule KM erzeugt (vgl. Figuren 1 bis 5).

Zusammengefasst wurden oben im Zusammenhang mit den Figuren 1 bis 17 zwei Ansätze zur kombinierten Verwendung von Umrichtermodulen mit und ohne Speicheranbindung vorgestellt. Insbesondere die zweite Methode weist Vorteile bezüglich der Reduktion von Schwingungen im Speicherstrom sowie auch bezüglich der erforderlichen Speicheranzahl und somit der Speicherkosten auf. Die Reduktion der Leistungsschwankung in den einzelnen Speichern kann eine direkte Einbindung beispielsweise von Batterien an die Modulzwischenkreise auch in Fällen erlauben, in welchen dies normalerweise durch die oberschwingungsbedingte Erwärmung bzw. Degradation sonst unvorteilhaft wäre.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

10  Anordnung
20  Steuereinrichtung
30  Anordnung
40  Steuereinrichtung

C  Kondensator
D  Diode
ES  elektrischer Speicher
KM  Kondensatormodul
R1  Reihenschaltung
R2  Reihenschaltung
R3  Reihenschaltung
S  Schalter
SM  Speichermodul
T  Teilmodul
Z  Sternpunkt

**Patentansprüche**

1. Anordnung mit zumindest einer Reihenschaltung (R1, R2, R3), die mindestens zwei in Reihe geschaltete Teilmodule (T) umfasst, von denen zumindest eines ein Kondensatormodul (KM) ist, das mindestens einen Schalter (S) und einen Kondensator (C) umfasst, und von denen zumindest eines ein Speichermodul (SM) ist, das mindestens einen Schalter (S) und einen elektrischen Speicher (ES) umfasst, wobei die Anordnung eine Steuereinrichtung (20, 40) zur Ansteuerung der Schalter (S) der Speicher- und Kondensatormodule (SM, KM) aufweist, und

- der Speicher des Speichermoduls eine größere Energiespeicherfähigkeit, insbesondere eine mindestens 100-mal größere Energiespeicherfähigkeit, als der Kondensator des Kondensatormoduls aufweist,
- wobei
- die Steuereinrichtung (20, 40) derart ausgestaltet ist, dass sie die Speichermodule der Reihenschaltungen (R1, R2, R3) oder zumindest einer der Reihenschaltungen (R1, R2, R3) derart ansteuert, dass die Summenspannung, die sich durch Summenbildung der an den Speichermodulen (SM) der Reihenschaltung (R1, R2, R3) abfallenden Teilspannungen ergibt, einem von der Steuereinrichtung (20, 40) ermittelten Sollverlauf folgt,
- **dadurch gekennzeichnet, dass**
- die Steuereinrichtung (20, 40) derart ausgestaltet ist, dass
- sie zur Ermittlung des Sollverlaufs ein iteratives Verfahren durchführt, bei dem in jedem Iterationsschritt jeweils ein erster vorläufiger Spannungsverlauf ermittelt wird gemäß

$$U1(t) = \frac{P}{Iz(t)} \cdot K$$

wobei U1(t) den ersten vorläufigen Spannungsverlauf bezeichnet, P die Wirkleistung bezeichnet, die die Reihenschaltung aufnehmen oder abgeben soll, Iz(t) den durch die Reihenschaltung fließenden Strom bezeichnet und K einen Korrekturfaktor bezeichnet,
- in jedem Iterationsschritt jeweils der erste vorläufige Spannungsverlauf unter Bildung eines zweiten vorläufigen Spannungsverlaufs auf einen vorgegebenen Maximalwert gekappt wird,
- in jedem Iterationsschritt optional jeweils der zweite vorläufige Spannungsverlauf unter Bildung eines dritten vorläufigen Spannungsverlaufs um einen Differenzwert angehoben wird,
- im Rahmen des iterativen Verfahrens durch Integration eines aus dem zweiten oder dritten vorläufigen Spannungsverlauf und dem Strom durch die Reihenschaltung gebildeten Produkts über der Zeit ein mittlerer Leistungswert bestimmt wird, und zwar vorzugsweise durch Integration über ein ganzzahliges Vielfaches einer halben Periodenlänge,
- der mittlere Leistungswert als Abbruchkriterium für das iterative Verfahren herangezogen wird, wobei das iterative Verfahren abgebrochen wird und der jeweils aktuelle zweite oder dritte vorläufige Spannungsverlauf als ermittelter Spannungsverlauf für die Ansteuerung der Speichermodule herangezogen wird, wenn die Differenz zwischen dem jeweils aktuellen mittleren Leistungswert und dem mittleren Leistungswert des vorherigen Iterationsschritts kleiner als eine vorgegebene Abbruchschwelle ist,
- mit dem mittleren Leistungswert der Korrekturfaktor angepasst wird, der zum Bilden des ersten vorläufigen Spannungsverlaufs herangezogen wurde, und
- der jeweils nächste erste vorläufige Spannungsverlauf im nächsten Iterationsschritt unter Berücksichtigung des angepassten Korrekturfaktors ermittelt wird.

2. Anordnung nach Anspruch 1,
**dadurch gekennzeichnet, dass**

- die Anordnung eine Anordnung zur Kompensation von Blindleistung und Wirkleistung eines elektrischen Netzes bildet und
- die Steuereinrichtung (20, 40) derart ausgestaltet ist, dass sie die Teilmodule zum Zwecke der Blind- und Wirkleistungskompensation im elektrischen Netz ansteuert.

3. Anordnung nach einem der voranstehenden Ansprüche,
**dadurch gekennzeichnet, dass**
der vorgegebene Sollverlauf derart ermittelt wird, dass die Einspeisung und Aufnahme von Oberschwingungsblindleistung durch die Speichermodule (SM) der Reihenschaltung (R1, R2, R3) minimal ist.

4. Anordnung nach einem der voranstehenden Ansprüche,
**dadurch gekennzeichnet, dass**
der Differenzwert ermittelt wird unter Berücksichtigung einer vorgegebenen Schwellenspannung und der Kondensatormodulsummenspannung, die sich durch Summenbildung der an den Kondensatormodulen der Reihenschaltung abfallenden Teilspannungen ergibt, und zwar vorzugsweise, indem

(a) die Kondensatormodulsummenspannung ermittelt wird gemäß:

$$Uc(t) = Uz(t) - Us(t)$$

wobei Uc(t) die Kondensatormodulsummenspannung bezeichnet, Uz(t) die an der Reihenschaltung abfallende Spannung bezeichnet und Us(t) die Summenspannung bezeichnet, die sich durch Summenbildung der an den Speichermodulen der Reihenschaltung abfallenden Teilspannungen ergibt, und
(b) folgende Zuordnungsoperation durchgeführt wird:

$$Udiff(t) = \begin{cases} Uc(t) - Uc\max & \text{für} \quad Uc(t) > Uc\max \\ 0 & \text{für} \quad |Uc(t)| \le Uc\max \\ Uc(t) + Uc\max & \text{für} \quad Uc(t) < Uc\max \end{cases}$$

wobei Udiff(t) den Differenzwert und Ucmax die Schwellenspannung bezeichnet.

5. Anordnung nach einem der Ansprüche 1-3,
**dadurch gekennzeichnet, dass**
die Steuereinrichtung (20, 40) den Sollverlauf ermittelt, indem sie in jedem Iterationsschritt des Iterationsverfahrens

(b) den zweiten vorläufigen Spannungsverlauf ermittelt gemäß:

$$U2(t) = \begin{cases} Us\max & \text{für} \quad U1(t) > Us\max \\ U1(t) & \text{für} \quad |U1(t)| \le Us\max \\ -Us\max & \text{für} \quad U1(t) < -Us\max \end{cases}$$

wobei U2(t) den zweiten vorläufigen Spannungsverlauf bezeichnet und Usmax den zur Kappung vorgesehenen Maximalwert bezeichnet,
(c) eine Kondensatormodulsummenspannung ermittelt gemäß:

$$Uc(t) = Uz(t) - U2(t)$$

wobei Uc(t) die Kondensatormodulsummenspannung bezeichnet und Uz(t) die an der Reihenschaltung abfallende Spannung bezeichnet,
(d) folgende Zuordnungsoperation durchführt:

$$Udiff(t) = \begin{cases} Uc(t) - Uc\max & \text{für} \quad Uc(t) > Uc\max \\ 0 & \text{für} \quad |Uc(t)| \le Uc\max \\ Uc(t) + Uc\max & \text{für} \quad Uc(t) < Uc\max \end{cases}$$

wobei Udiff(t) einen Differenzwert und Ucmax eine vorgegebene Schwellenspannung bezeichnet,
(e) den dritten vorläufigen Spannungsverlauf ermittelt gemäß:

$$U3(t) = Us(t) + Udiff$$

wobei U3(t) den dritten vorläufigen Spannungsverlauf bezeichnet,
(f) die Integration durchführt gemäß:

$$Mp = \frac{1}{T} \int_0^T U3(t) \cdot Iz(t) \, dt$$

wobei T die Periodenlänge der an der Reihenschaltung abfallenden Spannung bezeichnet und Mp den mittleren Leistungswert bezeichnet, und

(h) den Korrekturfaktor unter Bildung eines angepassten Korrekturfaktors anpasst, insbesondere gemäß:

$$Kneu = K \cdot \frac{P}{Mp}$$

wobei Kneu den angepassten Korrekturfaktor bezeichnet.

6. Anordnung nach einem der Ansprüche 1-3,
   **dadurch gekennzeichnet, dass**
   die Steuereinrichtung (20, 40) den Sollverlauf ermittelt, indem sie in jedem Iterationsschritt des Iterationsverfahrens

   (b) den zweiten vorläufigen Spannungsverlauf ermittelt gemäß:

$$U2(t) = \begin{cases} Us\max & \text{für} & U1(t) > Us\max \\ U1(t) & \text{für} & |U1(t)| \leq Us\max \\ -Us\max & \text{für} & U1(t) < -Us\max \end{cases}$$

wobei U2(t) den zweiten vorläufigen Spannungsverlauf bezeichnet und Usmax den zur Kappung vorgesehenen Maximalwert bezeichnet,
(c) die Integration durchführt gemäß:

$$Mp = \frac{1}{T} \int_0^T U2(t) \cdot Iz(t) \, dt$$

wobei T die Periodenlänge der an der Reihenschaltung abfallenden Spannung bezeichnet und Mp den mittleren Leistungswert bezeichnet, und
(e) den Korrekturfaktor unter Bildung eines angepassten Korrekturfaktors anpasst, insbesondere gemäß:

$$Kneu = K \cdot \frac{P}{Mp}$$

wobei Kneu den angepassten Korrekturfaktor bezeichnet.

7. Anordnung nach einem der voranstehenden Ansprüche 1 bis 3,
   **dadurch gekennzeichnet, dass**
   die Steuereinrichtung (20, 40) derart ausgestaltet ist, dass sie die Speichermodule (SM) der Reihenschaltungen (R1, R2, R3) oder zumindest einer der Reihenschaltungen (R1, R2, R3) derart ansteuert, dass die Summenspannung, die sich durch Summenbildung der an den Speichermodulen (SM) der Reihenschaltung (R1, R2, R3) abfallenden Teilspannungen ergibt, und der Strom durch die jeweilige Reihenschaltung folgende zeitliche Verläufe aufweisen:

$$Us(t) = \frac{P}{S} \cdot \hat{U} \cdot \cos(\omega t)$$

und

$$Iz(t) = \hat{I} \cdot \cos(\omega t)$$

wobei Us(t) den ermittelten Sollverlauf für die Summenspannung bezeichnet, P die von den Speichermodulen der Reihenschaltung gemeinsam abzugebende oder aufzunehmende Wirkleistung bezeichnet, S die von der Reihenschaltung abzugebende oder aufzunehmende Scheinleistung bezeichnet, $\hat{U}$ den Scheitelwert der an der Reihenschaltung anliegenden Spannung bezeichnet und $\hat{I}$ den Scheitelwert des durch die Reihenschaltung fließenden Stromes bezeichnet.

8. Verfahren zum Betreiben einer Anordnung mit zumindest einer Reihenschaltung (R1, R2, R3), die mindestens zwei in Reihe geschaltete Teilmodule umfasst, von denen zumindest eines ein Kondensatormodul (KM) ist, das mindestens einen Schalter (S) und einen Kondensator (C) umfasst, und von denen zumindest eines ein Speichermodul (SM) ist, das mindestens einen Schalter (S)) und einen elektrischen Speicher (ES) umfasst, wobei der Speicher des Speichermoduls eine größere Energiespeicherfähigkeit als der Kondensator (C) des Kondensatormoduls (KM) aufweist,

wobei
die Speichermodule (SM) derart angesteuert werden, dass die Summenspannung, die sich durch Summenbildung der an den Speichermodulen (SM) der Reihenschaltung (R1, R2, R3) abfallenden Teilspannungen ergibt, gemäß einem von der Steuereinrichtung (20, 40) ermittelten Sollverlauf folgt,

**dadurch gekennzeichnet, dass**

- von der Steuereinrichtung (20, 40) zur Ermittlung des Sollverlaufs ein iteratives Verfahren durchführt wird, bei dem in jedem Iterationsschritt jeweils ein erster vorläufiger Spannungsverlauf ermittelt wird gemäß

$$U1(t) = \frac{P}{Iz(t)} \cdot K$$

wobei U1(t) den ersten vorläufigen Spannungsverlauf bezeichnet, P die Wirkleistung bezeichnet, die die Reihenschaltung aufnehmen oder abgeben soll, Iz(t) den durch die Reihenschaltung fließenden Strom bezeichnet und K einen Korrekturfaktor bezeichnet,
- in jedem Iterationsschritt jeweils der erste vorläufige Spannungsverlauf unter Bildung eines zweiten vorläufigen Spannungsverlaufs auf einen vorgegebenen Maximalwert gekappt wird,
- in jedem Iterationsschritt optional jeweils der zweite vorläufige Spannungsverlauf unter Bildung eines dritten vorläufigen Spannungsverlaufs um einen Differenzwert angehoben wird,
- im Rahmen des iterativen Verfahrens durch Integration eines aus dem zweiten oder dritten vorläufigen Spannungsverlauf und dem Strom durch die Reihenschaltung gebildeten Produkts über der Zeit ein mittlerer Leistungswert bestimmt wird, und zwar vorzugsweise durch Integration über ein ganzzahliges Vielfaches einer halben Periodenlänge,
- der mittlere Leistungswert als Abbruchkriterium für das iterative Verfahren herangezogen wird, wobei das iterative Verfahren abgebrochen wird und der jeweils aktuelle zweite oder dritte vorläufige Spannungsverlauf als ermittelter Spannungsverlauf für die Ansteuerung der Speichermodule herangezogen wird, wenn die Differenz zwischen dem jeweils aktuellen mittleren Leistungswert und dem mittleren Leistungswert des vorherigen Iterationsschritts kleiner als eine vorgegebene Abbruchschwelle ist,
- mit dem mittleren Leistungswert der Korrekturfaktor angepasst wird, der zum Bilden des ersten vorläufigen Spannungsverlaufs herangezogen wurde, und
- der jeweils nächste erste vorläufige Spannungsverlauf im nächsten Iterationsschritt unter Berücksichtigung des angepassten Korrekturfaktors ermittelt wird.

## Claims

1. Arrangement having at least one series circuit (R1, R2, R3) that comprises at least two series-connected submodules (T), at least one of which is a capacitor module (KM) that comprises at least one switch (S) and one capacitor (C), and at least one of which is a storage module (SM) that comprises at least one switch (S) and one electrical store (ES), wherein the arrangement has a controller (20, 40) for driving the switches (S) of the storage and capacitor modules (SM, KM), and

- the store of the storage module has an energy storage capacity greater, in particular an energy storage capacity at least 100 times greater, than the capacitor of the capacitor module,
- wherein
- the controller (20, 40) is designed such that it drives the storage modules of the series circuits (R1, R2, R3) or at least one of the series circuits (R1, R2, R3) such that the sum voltage that results from adding together the partial voltages dropped across the storage modules (SM) of the series circuit (R1, R2, R3) follows a desired profile calculated by the controller (20, 40),
- **characterized in that**
- the controller (20, 40) is designed such that,
- in order to calculate the desired profile, it performs an iterative method in which, in each iteration step, a respective first preliminary voltage profile is calculated in accordance with

$$U1(t) = \frac{P}{Iz(t)} \cdot K$$

wherein U1(t) denotes the first preliminary voltage profile, P denotes the active power that the series circuit is intended to consume or output, Iz(t) denotes the current flowing through the series circuit and K denotes a correction factor,
- in each iteration step, the respective first preliminary voltage profile is capped to a predefined maximum value, forming a second preliminary voltage profile,
- in each iteration step, the respective second preliminary voltage profile is optionally raised by a difference value, forming a third preliminary voltage profile,
- in the course of the iterative method, an average power value is determined by integrating a product, formed from the second or third preliminary voltage profile and the current through the series circuit, over time, specifically preferably through integration over an integer multiple of a half period length,
- the average power value is applied as a stoppage criterion for the iterative method, wherein the iterative method is stopped and the respective current second or third preliminary voltage profile is applied as calculated voltage profile for driving the storage modules, if the difference between the respective current average power value and the average power value of the previous iteration step is less than a predefined stop threshold,
- the average power value is used to adjust the correction factor that was applied so as to form the first preliminary voltage profile, and
- the respective next first preliminary voltage profile is calculated in the next iteration step taking into account the adjusted correction factor.

2. Arrangement according to Claim 1,
**characterized in that**

- the arrangement forms an arrangement for compensating reactive power and active power from an electricity grid, and
- the controller (20, 40) is designed such that it drives the submodules in order to compensate reactive and active power in the electricity grid.

3. Arrangement according to either of the preceding claims,
**characterized in that**
the predefined desired profile is calculated such that the infeed and consumption of harmonic reactive power by the storage modules (SM) of the series circuit (R1, R2, R3) is minimal.

4. Arrangement according to one of the preceding claims,
**characterized in that**
the difference value is calculated taking into account a predefined threshold voltage and the capacitor module sum voltage that results from adding together the partial voltages dropped across the capacitor modules of the series circuit, specifically preferably by

(a) determining the capacitor module sum voltage in accordance with:

$$Uc(t) = Uz(t) - Us(t)$$

wherein Uc(t) denotes the capacitor module sum voltage, Uz(t) denotes the voltage dropped across the series circuit and Us(t) denotes the sum voltage that results from adding together the partial voltages dropped across the storage modules of the series circuit, and
(b) performing the following assignment operation:

$$Udiff(t) = \begin{cases} Uc(t) - Uc\max & for \quad Uc(t) > Uc\max \\ 0 & for \quad |Uc(t)| \le Uc\max \\ Uc(t) + Uc\max & for \quad Uc(t) < Uc\max \end{cases}$$

wherein Udiff(t) denotes the difference value and Ucmax denotes the threshold voltage.

5. Arrangement according to one of Claims 1-3,
**characterized in that**
the controller (20, 40) calculates the desired profile by, in each iteration step of the iteration method,

(b) calculating the second preliminary voltage profile in accordance with:

$$U2(t) = \begin{cases} Us\max & for \quad U1(t) > Us\max \\ U1(t) & for \quad |U1(t)| \le Us\max \\ -Us\max & for \quad U1(t) < -Us\max \end{cases}$$

wherein U2(t) denotes the second preliminary voltage profile and Usmax denotes the maximum value provided for capping purposes,
(c) calculating a capacitor module sum voltage in accordance with:

$$Uc(t) = Uz(t) - U2(t)$$

wherein Uc(t) denotes the capacitor module sum voltage and Uz(t) denotes the voltage dropped across the series circuit,
(d) performing the following assignment operation:

$$Udiff(t) = \begin{cases} Uc(t) - Uc\max & for \quad Uc(t) > Uc\max \\ 0 & for \quad |Uc(t)| \le Uc\max \\ Uc(t) + Uc\max & for \quad Uc(t) < Uc\max \end{cases}$$

wherein Udiff(t) denotes a difference value and Ucmax denotes a predefined threshold voltage,
(e) calculating the third preliminary voltage profile in accordance with:

$$U3(t) = Us(t) + Udiff$$

wherein U3(t) denotes the third preliminary voltage profile,
(f) performing the integration in accordance with:

$$Mp = \frac{1}{T} \int_0^T U3(t) \cdot Iz(t) \, dt$$

wherein T denotes the period length of the voltage dropped across the series circuit and Mp denotes the average power value, and
(h) adjusting the correction factor, forming an adjusted correction factor, in particular in accordance with:

$$Knew = K \cdot \frac{P}{Mp}$$

wherein Knew denotes the adjusted correction factor.

6. Arrangement according to one of Claims 1-3,
**characterized in that**
the controller (20, 40) calculates the desired profile by, in each iteration step of the iteration method,

   (b) calculating the second preliminary voltage profile in accordance with:

$$U2(t) = \begin{cases} Us\max & for \quad U1(t) > Us\max \\ U1(t) & for \quad |U1(t)| \le Us\max \\ -Us\max & for \quad U1(t) < -Us\max \end{cases}$$

wherein U2(t) denotes the second preliminary voltage profile and Usmax denotes the maximum value provided for capping purposes,
(c) performing the integration in accordance with:

$$Mp = \frac{1}{T} \int_0^T U2(t) \cdot Iz(t)\, dt$$

wherein T denotes the period length of the voltage dropped across the series circuit and Mp denotes the average power value, and
(e) adjusting the correction factor, forming an adjusted correction factor, in particular in accordance with:

$$Knew = K \cdot \frac{P}{Mp}$$

wherein Knew denotes the adjusted correction factor.

7. Arrangement according to one of preceding Claims 1 to 3,
**characterized in that**
the controller (20, 40) is designed such that it drives the storage modules (SM) of the series circuits (R1, R2, R3) or at least one of the series circuits (R1, R2, R3) such that the sum voltage that results from adding together the partial voltages dropped across the storage modules (SM) of the series circuit (R1, R2, R3) and the current through the respective series circuit have the following temporal profiles:

$$Us(t) = \frac{P}{S} \cdot \hat{U} \cdot \cos(\omega t)$$

and

$$Iz(t) = \hat{I} \cdot \cos(\omega t)$$

wherein Us(t) denotes the calculated desired profile for the sum voltage, P denotes the active power to be output or to be consumed jointly by the storage modules of the series circuit, S denotes the apparent power to be output or to be consumed by the series circuit, $\hat{U}$ denotes the peak value of the voltage present at the series circuit and $\hat{I}$ denotes the peak value of the current flowing through the series circuit.

8. Method for operating an arrangement having at least one series circuit (R1, R2, R3) that comprises at least two series-connected submodules, at least one of which is a capacitor module (KM) that comprises at least one switch (S) and one capacitor (C), and at least one of which is a storage module (SM) that comprises at least one switch (S) and one electrical store (ES), wherein
the store of the storage module has an energy storage capacity greater than the capacitor (C) of the capacitor module (KM),
wherein
the storage modules (SM) are driven such that the sum voltage that results from adding together the partial voltages dropped across the storage modules (SM) of the series circuit (R1, R2, R3) follows a desired profile calculated by the controller (20, 40),
**characterized in that**,

- in order to calculate the desired profile, the controller (20, 40) performs an iterative method in which, in each iteration step, a respective first preliminary voltage profile is calculated in accordance with

$$U1(t) = \frac{P}{Iz(t)} \cdot K$$

wherein U1(t) denotes the first preliminary voltage profile, P denotes the active power that the series circuit is intended to consume or output, Iz(t) denotes the current flowing through the series circuit and K denotes a correction factor,
- in each iteration step, the respective first preliminary voltage profile is capped to a predefined maximum value, forming a second preliminary voltage profile,
- in each iteration step, the respective second preliminary voltage profile is optionally raised by a difference value, forming a third preliminary voltage profile,
- in the course of the iterative method, an average power value is determined by integrating a product, formed from the second or third preliminary voltage profile and the current through the series circuit, over time, specifically preferably through integration over an integer multiple of a half period length,
- the average power value is applied as a stoppage criterion for the iterative method, wherein the iterative method is stopped and the respective current second or third preliminary voltage profile is applied as calculated voltage profile for driving the storage modules, if the difference between the respective current average power value and the average power value of the previous iteration step is less than a predefined stop threshold,
- the average power value is used to adjust the correction factor that was applied so as to form the first preliminary voltage profile, and
- the respective next first preliminary voltage profile is calculated in the next iteration step taking into account the adjusted correction factor.

**Revendications**

1. Agencement ayant au moins un circuit (R1, R2, R3) série, qui comprend au moins deux sous-modules (T) montés en série, dont l'un au moins est un module (KM) de condensateur, qui comprend au moins un interrupteur (S) et un condensateur (C), et dont l'un au moins est un module (SM) d'accumulateur, qui comprend au moins un interrupteur (S) et un accumulateur (ES) électrique, l'agencement ayant un dispositif (20, 40) de commande pour commander les interrupteurs (S) des modules (SM, KM) d'accumulateur et de condensateur, et

- l'accumulateur du module d'accumulateur a une capacité d'accumulation d'énergie plus grande, notamment une capacité d'accumulation d'énergie au moins 100 fois plus grande, que le condensateur du module de condensateur,
- dans lequel
- le dispositif (20, 40) de commande est conformé de manière à commander les modules d'accumulateur des circuits (R1, R2, R3) série ou d'au moins l'un des circuits (R1, R2, R3) série, de façon à ce que la tension somme, qui provient de la formation de la somme des sous-tensions chutant aux bornes des modules (SM) d'accumulateur du circuit (R1, R2, R3) série, suive une courbe de consigne déterminée par le dispositif (20, 40) de commande,
- **caractérisé en ce que**
- le dispositif (20, 40) de commande est conformé de manière
- à effectuer, pour la détermination de la courbe de consigne, un procédé par itération, dans lequel, dans chaque stade d'itération, on détermine respectivement une première courbe de tension provisoire suivant

$$U1(t) = \frac{P}{Iz(t)} \cdot K$$

U1(t) désignant la première courbe de tension provisoire, P désignant la puissance active que le circuit série doit absorber ou céder, *Iz(t)* désignant le courant passant dans le circuit série et *K* désignant un facteur de correction,
- dans chaque stade d'itération, on coiffe, à une valeur maximum donnée à l'avance, la première courbe de tension provisoire, en formant une deuxième courbe de tension provisoire,
- dans chaque stade d'itération, on élève, d'une valeur de différence, éventuellement respectivement la deuxième courbe de tension provisoire, en formant une troisième courbe de tension provisoire,
- dans le cadre du procédé par itération, on détermine une valeur moyenne de puissance, par intégration en fonction du temps d'un produit formé de la deuxième ou de la troisième courbe de tension provisoire, par le courant passant dans le circuit série et cela, de préférence, en intégrant sur un multiple en nombre entier d'une demi-longueur de période,
- on tire parti de la valeur moyenne de puissance comme critère d'interruption du procédé par itération, le procédé par itération étant interrompu et la deuxième ou la troisième courbe de tension provisoire en cours étant prise comme courbe de tension déterminée pour la commande des modules d'accumulateur, si la différence entre la valeur moyenne de puissance en cours et la valeur moyenne de puissance du stade d'itération précédent est plus petite qu'un seuil d'interruption donné à l'avance,
- par la valeur moyenne de puissance, on adapte un facteur de correction, dont a tiré parti pour former la première courbe de tension provisoire, et
- on détermine la première courbe de tension provisoire suivante dans le stade d'itération suivant, en tenant compte du facteur de correction adapté.

2. Agencement suivant la revendication 1,
   **caractérisé en ce que**

   - l'agencement forme un agencement de compensation de la puissance réactive et de la puissance active d'un réseau électrique et
   - le dispositif (20, 40) de commande est conformé de manière à commander les sous-modules en vue de la compensation de la puissance réactive et de la puissance active du réseau électrique.

3. Agencement suivant l'une des revendications précédentes,
   **caractérisé en ce que**
   l'on détermine la courbe de consigne donnée à l'avance, de manière à ce que l'injection et l'absorption de la puissance réactive d'harmonique par les modules (SM) d'accumulateur du circuit (R1, R2, R3) série soient minimum.

4. Agencement suivant l'une des revendications précédentes,
   **caractérisé en ce que**
   l'on détermine la valeur de différence en tenant compte d'une tension de seuil donnée à l'avance et d'une tension somme de module de condensateur, qui provient de la formation de la somme des sous-tensions chutant aux bornes des modules de condensateur du circuit série, et cela, de préférence, en

   (a) déterminant la tension somme de module de condensateur suivant :

   $$Uc(t) = Uz(t) - Us(t)$$

   *Uc(t)* désignant la tension somme de module de condensateur, *Uz(t)* désignant la tension chutant aux bornes du circuit série et *Us(t)* désignant la tension somme, qui provient de la formation de la somme des sous-tensions chutant aux bornes des modules de condensateur du circuit série, et
   (b) on effectue l'opération d'association suivante :

   $$Udiff(t) = \begin{cases} Uc(t) - Ucmax \ pour \ Uc(t) > Ucmax \\ 0 \ pour \left| Uc(t) \right| \leq Ucmax \\ Uc(t) - Ucmax \ pour \ Uc(t) < Ucmax \end{cases}$$

   *Udiff(t)* désignant la valeur de différence et *Ucmax* désignant la tension de seuil.

5. Agencement suivant l'une des revendications 1 à 3,
   **caractérisé en ce que**

le dispositif (20, 40) de commande détermine la courbe de consigne en, pour chaque stade d'itération du procédé d'itération,

(b) déterminant la deuxième courbe de tension provisoire suivant :

$$U2(t) = \begin{cases} Usmax \ pour \ U1(t) > Usmax \\ U1(t) pour \ |U1(t)| \leq Usmax \\ -Usmax \ pour \ U1(t) < Usmax \end{cases}$$

$U2(t)$ désignant la deuxième courbe de tension provisoire et $Usmax$ désignant la valeur maximum prévue pour le coiffement,
(c) déterminant une tension somme de module de condensateur suivant :

$$Uc(t) = Uz(t) - U2(t)$$

$Uc(t)$ désignant la tension somme de module de condensateur et $Uz(t)$ désignant la tension chutant aux bornes du circuit série,
(d) effectuant l'opération d'association suivante :

$$Udiff(t) = \begin{cases} Uc(t) - Ucmax \ pour \ Uc(t) > Ucmax \\ 0 \ pour \ |Uc(t)| \leq Ucmax \\ Uc(t) - Ucmax \ pour \ Uc(t) < Ucmax \end{cases}$$

$Udiff(t)$ désignant la valeur de différence et $Ucmax$ désignant la tension de seuil donnée à l'avance,
(e) déterminant la troisième courbe de tension provisoire suivant :

$$U3(t) = Us(t) - Udiff$$

$U3(t)$ désignant la troisième courbe de tension provisoire,
(f) effectuant l'intégration suivant :

$$Mp = \frac{1}{T} \int_0^T U3(t) - Iz(t) dt$$

T désignant la longueur de période de la tension chutant aux bornes du circuit série et $Mp$ désignant la valeur moyenne de puissance, et
(h) adaptant le facteur de correction en formant un facteur de correction adapté, notamment suivant :

$$Kneu = K \cdot \frac{P}{Mp}$$

$Kneu$ désignant le facteur 1 de correction adapté.

6. Agencement suivant l'une des revendications 1 à 3, **caractérisé en ce que**
le dispositif (20, 40) de commande détermine la courbe de consigne en, pour chaque stade d'itération du procédé d'itération,

(b) déterminant la deuxième courbe de tension provisoire suivant :

$$U2(t) = \begin{cases} Usmax \; pour \; U1(t) > Usmax \\ U1(t) pour \, |U1(t)| \leq Usmax \\ -Usmax \; pour \; U1(t) < Usmax \end{cases}$$

*U2(t)* désignant la deuxième courbe de tension provisoire et *Usmax* désignant la valeur maximum prévue pour le coiffement,
(c) effectuant l'intégration suivant :

$$Mp = \frac{1}{T} \int_{0}^{T} U2(t) - Iz(t)dt$$

T désignant la longueur de période de la tension chutant aux bornes du circuit série et *Mp* désignant la valeur moyenne de puissance, et
(e) adaptant le facteur de correction en formant un facteur de correction adapté, notamment suivant :

$$Kneu = K \cdot \frac{P}{Mp}$$

*Kneu* désignant le facteur 1 de correction adapté.

**7.** Agencement suivant l'une des revendications précédentes 1 à 3,
**caractérisé en ce que**
le dispositif (20, 40) de commande est conformé de manière à commander les modules (SM) d'accumulateur des circuits (R1, R2, R3) série ou d'au moins l'un des circuits (R1, R2, R3) série, de façon à ce que la tension somme, qui provient de la formation de la somme des sous-tensions chutant aux bornes des modules (SM) d'accumulateur du circuit (R1, R2, R3) série, et le courant passant par le circuit série respectif aient les courbes en fonction du temps suivantes :

$$Us(t) = \frac{P}{S} \cdot \hat{U} \cdot cos\,(\omega t)$$

et

$$Is(t) = \hat{I} \cdot \cos\,(\omega t)$$

*Us(t)* désignant la courbe de consigne déterminée de la tension somme, P désignant la puissance active cédée ou absorbée conjointement par les modules d'accumulateur du circuit série, S désignant la puissance apparente cédée ou absorbée par le circuit série, Û désignant la valeur de crête de la tension s'appliquant au circuit série et Î désignant la valeur de crête du courant passant dans le circuit série.

**8.** Procédé pour faire fonctionner un agencement ayant au moins un circuit (R1, R2, R3) série, qui comprend au moins deux sous-modules (T) montés en série, dont l'un au moins est un module (KM) de condensateur, qui comprend au moins un interrupteur (S) et un condensateur (C), et dont l'un au moins est un module (SM) d'accumulateur, qui comprend au moins un interrupteur (S) et un accumulateur (ES) électrique, dans lequel
l'accumulateur du module accumulateur a une capacité d'accumulation d'énergie plus grande que le condensateur (C) du module (KM) de condensateur,
dans lequel on commande les module (SM) d'accumulateur, de manière à ce que la tension somme, qui provient des sous-tensions chutant aux bornes des modules (SM) d'accumulateur du circuit (R1, R2, R3) série, suive une courbe de consigne déterminée par le dispositif (20, 40) de commande,
**caractérisé en ce que**

- on effectue par le dispositif (20, 40) de commande pour la détermination de la courbe de consigne un procédé par itération, dans lequel dans chaque stade d'itération, on détermine respectivement une première courbe de tension provisoire suivant

$$U1(t) = \frac{P}{Iz(t)} \cdot K$$

$U1(t)$ désignant la première courbe de tension provisoire, P désignant la puissance active que le circuit série doit absorber ou céder, $Iz(t)$ désignant le courant passant dans le circuit série et K désignant un facteur de correction,
- dans chaque stade d'itération, on coiffe, à une valeur maximum donnée à l'avance, la première courbe de tension provisoire, en formant une deuxième courbe de tension provisoire,
- dans chaque stade d'itération, on élève, d'une valeur de différence, éventuellement respectivement la deuxième courbe de tension provisoire, en formant une troisième courbe de tension provisoire,
- dans le cadre du procédé par itération, on détermine une valeur moyenne de puissance, par intégration en fonction du temps d'un produit formé de la deuxième ou de la troisième courbe de tension provisoire, par le courant passant dans le circuit série et cela, de préférence, en intégrant sur un multiple en nombre entier d'une demi-longueur de période,
- on tire parti de la valeur moyenne de puissance comme critère d'interruption du procédé par itération, le procédé par itération étant interrompu et la deuxième ou la troisième courbe de tension provisoire en cours étant prise comme courbe de tension déterminée pour la commande des modules d'accumulateur, si la différence entre la valeur moyenne de puissance en cours et la valeur moyenne de puissance du stade d'itération précédent est plus petite qu'un seuil d'interruption donné à l'avance,
- par la valeur moyenne de puissance, on adapte un facteur de correction, dont a tiré parti pour former la première courbe de tension provisoire, et
- on détermine la première courbe de tension provisoire suivante dans le stade d'itération suivant, en tenant compte du facteur de correction adapté.

FIG 1

FIG 2

FIG 3

**FIG 4**

**FIG 5**

FIG 6

U [ kV ]
I [ 100A ]

62
61

t [ ms ]

FIG 7

U [ kV ]

71
72

t [ ms ]

FIG 8

P [ MW ]

82, 83
81

t [ ms ]

FIG 9

E [ kJ ]

92, 93
91

t [ ms ]

EP 3 245 700 B1

FIG 10

U [ kV ]
I [ 100A ]

61

62

FIG 11

U [ kV ]

72

71

FIG 12

P [ MW ]

82

83

81

FIG 13

E [ kJ ]

91, 93

92

**FIG 14**

U [ kV ]
I [ 100A ]

141
142

t [ ms ]

**FIG 15**

U [ kV ]

152
151

t [ ms ]

**FIG 16**

P [ MW ]

161
163
162

t [ ms ]

**FIG 17**

E [ kJ ]

171
173
172

t [ ms ]

EP 3 245 700 B1

**IN DER BESCHREIBUNG AUFGEFÜHRTE DOKUMENTE**

**In der Beschreibung aufgeführte Patentdokumente**

- WO 2012156261 A2
- WO 2010040388 A1